# EUROPEAN PATENT APPLICATION

(11) **EP 1 502 945 A1**
(43) Date of publication of application: **02.02.2005**
(21) Application number: 03717589.0
(22) Date of filing: 15.04.2003
(51) Int. Cl.: C12G 1/022, C12N 9/24

(54) **COMPOSITIONS FOR IMPROVING THE FLAVOR OF ALCOHOLIC BEVERAGE MADE FROM GRAPE**

(30) Priority: 16.04.2002 JP 2002113592
(71) Applicant: Amano Enzyme Inc., Nagoya-shi, Aichi 460-0003 (JP); National Research Institute of Brewing, Higashihiroshima-shi, Hiroshima 739-0046 (JP)
(72) Inventor: TSURUHAMI, Kazutaka, c/o AMANO ENZYME INC., Kakamigahara-shI, GIFU 509-0108 (JP); AMANO, Hitoshi, c/o AMANO ENZYME INC., Kakamigahara-shi, Gifu 509-0108 (JP); MORI, Shigeharu, c/o AMANO ENZYME INC., Kakamigahara-shi, Gifu 509-0108 (JP); GOTO, Nami, c/o NATIONAL RESEARCH INST. OF BREWING, Higashihiroshima-shi, Hiroshima 739-0046 (JP); ARAMAKI, Isao, c/o NATIONAL RCH. INST. OF BREWING, Higashihiroshima-shI, Hiroshima 739-0046 (JP); FUJITA, Akiko, c/o NATIONAL RCH. INST. OF BREWING, Higashihiroshima-shI, Hiroshima 739-0046 (JP)
(74) Representative: Steinecke, Peter, Dr.
(86) International application number: PCT/JP2003/004770
(87) International publication number: WO 2003/087290

(57) **Abstract**

It is intended to provide novel compositions usable in improving the flavor of an alcoholic beverage made from grapes typified by wine. Namely, a composition usable in improving the flavor of an alcoholic beverage made from grapes which contains the culture of a strain belonging to a genus Aspergillus, Penicillium, Rhizopus, Rhizomucor, Talaromyces, Mortierella, Cryptococcus, Microbacterium, Corynebacterium or Actinoplanes and being capable of producing diglycosidase.

## Description

### TECHNICAL FIELD

This invention relates to compositions employed to improve the flavors of alcoholic beverages made from grapes. The present invention additionally relates to methods of manufacturing grape-based alcoholic beverages with such compositions and to grape-based alcoholic beverages manufactured with such compositions. Application of the present invention will provide grape-based alcoholic beverages with improved flavors, such as wine with superior flavor.

### BACKGROUND ART

Broad varieties of wine having distinctive flavors attributable to their places of origin and the different manufacturing methods are in distribution today. The flavor of wine is primarily determined by the quality of its ingredient, grape.
Meanwhile, efforts are being made to increase the amounts of the components responsible for the aroma of wine so as to provide wine that is rich in aroma, i.e., wine with improved flavor. A known method of improving the flavor of wine involves addition of β-glucosidase in a wine making process so as to increase the aroma of the wine through the operation of this enzyme.
Monoterpenes, which are the components responsible for the aroma characteristic of wine made from muscat grapes and German grapes, such as Riesling and Kelner, exist in grapes mainly as glycosides of disaccharides (α-L-arabinofuranosyl-β-D-glucopyranoside, α-L-rhamnopyranosyl-β-D-glucopyranoside, and apiofuranosyl-β-D-glucopyranoside)
β-glucosidase exhibits a low glucose resistance. Accordingly, in winemaking, β-glucosidase cannot be used immediately before the fermentation step, when the glucose concentration is high; rather, it should be added in the advanced stage of fermentation when the glucose concentration has become lower in the crude wine if the enzyme is to work. Accordingly, if used at all, β-glucosidase has been added to crude wine after the fermentation is completed (for example, added in the racking step (the step of decanting supernatant)) This means that such a method using β-glucosidase has constraints on the timing of initiating the process of enzymatic reaction, making the method less than convenient and flexible.

Today, consumers' preferences have been increasingly diversified, such that there is a greater demand for wine with novel flavors. In view of such a demand, it has been desired to develop a method of making wine that augments the components responsible for the aroma of wine through novel mechanisms.
In view of the foregoing problems, an object of the present invention is to provide novel compositions that can be employed to improve the flavors of grape-based alcoholic beverages, most notably wine. In addition, other objects of the present invention include provision of methods of manufacturing grape-based alcoholic beverages with improved flavors and provision of grape-based alcoholic beverages with improved flavors. Moreover, other objects of the invention are to provide methods of manufacturing such grape-based alcoholic beverages without complicating their manufacturing processes and to provide such grape-based alcoholic beverages without complicating their manufacturing processes.

### DISCLOSURE OF INVENTION

In view of the foregoing objects, the inventors have selected wine, a typical grape-based alcoholic beverage, as a model to improve the flavors of such beverages. The inventors first paid attention to the action of diglycosidases and eventually conceived the idea of using cultures of microorganisms that produce diglycosidases as such flavor-improving compositions. When added to the ingredients to operate during the fermentation step of wine, these compositions efficiently brought out the components responsible for aroma in the ingredients and thus produced wine with superior flavor. This led to the knowledge that such compositions including diglycosidases are useful in improving the flavors of wine and other alcoholic beverages made from grapes. Furthermore, these compositions are capable of operation in the fermentation steps in which conventional β-glucosidases cannot operate, showing that these compositions improve the wine flavor through a different mechanism from the one through which β-glucosidases improve the flavors of wine. It has been also learned that these compositions offers other advantages in winemaking processes. For example, these compositions can be removed together with the yeast following the fermentation step.
The present invention is based on these findings and provides the following:
(1) A composition for improving the flavor of an alcoholic beverage made from grapes, the composition containing a culture of a strain belonging to Genus Aspergillus, Genus Penicillium, Genus Rhizopus, Genus Rhizomucor, Genus Talaromyces, Genus Mortierella, Genus Cryptococcus, Genus Microbacterium, Genus Corynebacterium, or Genus Actinoplanes, and being capable of producing diglycosidase.
(2) A composition as set forth in Section (1) . wherein the strain belongs to Aspergillus niger, Aspergillus fumigatus, or Penicillium multicolor.
(3) A composition as set forth in Section (1) , wherein the strain belongs to Aspergillus niger IF04407, Aspergillus niger IAM2020. Aspergillus fumigatus IAM2046, or Penicillium multicolor IAM7153.
(4) A composition including an extracellular enzyme produced by Penicillium multicolor IAM7153.
(5) A composition as set forth in any one of Sections (1) to (4), wherein the diglycosidase activity is 0.0001 units/mg or more in dry weight.
(6) A method of manufacturing a grape-based alcoholic beverage, including an enzymatic process step of causing any one of the flavor-improving compositions set forth in Sections (1) to (5) to operate.
(7) A method of manufacturing as set forth in Section (6), wherein the enzymatic process step includes addition of the flavor-improving composition in part of the process of manufacturing the grape-based alcoholic beverage.
(8) A method of manufacturing as set forth in Section (7), wherein the part of the process of manufacturing includes one or more steps selected from the group consisting of crushing and destemming, squeezing, fermentation, sediment removal, and aging.
(9) A method of manufacturing a grape-based alcoholic beverage, characterized by adding any one of the compositions set forth in Sections (1) to (5) in the fermentation and/or aging step.
(10) A method of manufacturing a grape-based alcoholic beverage as set forth in any one of Sections (6) to (9), wherein the grape-based alcoholic beverage is wine.
(11) A grape-based alcoholic beverage manufactured by any one of the methods set forth in Sections (6) to (10).

As used in this specification, the term "improving flavor" is intended to include augmenting the flavor of an alcoholic beverage made from grapes, thus increasing the amounts of the components in the beverage responsible for its aroma and enriching the flavor of the beverage. For example, the term includes augmentation of the fragrance and mellowness of such a beverage. As used in this specification, the term "improving flavor" is also intended to include augmenting the amount of a specific component responsible for the aroma of an alcoholic beverage and thus indirectly affecting how the other aromatic components are sensed, thereby affecting the overall aroma of the beverage as sensed by a person.

Furthermore, as used in this specification, the term 'standard manufacturing process" is intended to mean a process of making an alcoholic beverage from grapes that does not include the enzymatic process step according to the present invention.
Moreover, as used in this specification, the term "percent (%)" is intended to mean % (w/v).

### BEST MODE FOR CARRYING OUT THE INVENTION

In one aspect, the present invention relates to compositions for improving the flavor of an alcoholic beverage made from grapes. The flavor-improving compositions of the present invention (also referred to as "the compositions" hereafter) may be prepared from culture solution (it may include fungal cells) obtained by culturing a microorganism capable of producing a diglycosidase. The microorganisms that may be employed include those known for their diglycosidases activities, such as Genus Aspergillus, Genus Penicillium, Genus Rhizopus, Genus Rhizomucor, Genus Talaromyces, Genus Mortierella, Genus Cryptococcus, Genus Microbacterium, Genus Corynebacterium, and Genus Actinoplanes.

Examples of more preferred microorganisms include Aspergillus niger (for example, the IF04407 strain (available from Institute for Fermentation, Inc., at 2-17-85, Juso-honmachi, Yodogawa-ku. Osaka), IAM 2020 strain), Aspergillus fumigatus (for example, the IAM2046 strain) and Penicillium multicolor (for example, the IAM7153 strain, available from Institute of Molecular and Cellular Biosciences, the University of Tokyo at 1-1-1, Yayoi, Bunkyo-ku, Tokyo).

A particularly preferred microorganism is Penicillium multicolor IAM7153. This is particularly preferable because 8-galactosidase which is derived from Penicillium multicolor is designated as a safe enzyme on the official List of Food Additives and thus a high level of safety is presumed from compositions obtained from such a safe fungus.

To produce the components of the present invention with the aforementioned microorganisms, any processes and conditions suitable for culturing these microorganisms may be selected. For example, although either liquid culture or solid culture may be employed, liquid culture is the preferred method for culturing the aforementioned microorganisms. The following is an example of liquid culture.

Any culture medium may be used as long as it permits growth of microorganisms producing diglycosidases. Examples include media containing carbon source such as glucose, sucrose, gentiobiose, soluble starch, glycerin, dextrin, molasses, organic acid and the like, nitrogen source such as ammonium sulfate. ammonium carbonate, ammonium phosphate, ammonium acetate, peptone, yeast extract, corn steep liquor, casein hydrolysate, bran, meat extract and the like, and mineral salts such as potassium sat, magnesium salt, phosphate, manganese salt, ferrate, zinc salt and the like.

Furthermore, various inducers can be added to the medium to produce and accumulate diglycosidases. For example, saccharides may be used as the inducers, including such preferred saccharides as gentose (for example, gentose #80 available from Nihon Shokuhin Kako Co. , Ltd. ). gentiobiose, gentio-oligosaccharide (for example, the gentio-oligosaccharide available from Wako Pure Chemical Industries, Ltd.), and galactomannan. The amount of such inducers added is not limited insofar as the productivity of diglycosidase is increased. Preferably, the amount of such inducers added is in the range of 0.01-10%.

The medium is cultured at the temperatures typically of about 10-50 ° C, preferably about 25-30 ° C, under aerobic conditions for about one to fifteen days, preferably about four to seven days, with the medium adjusted to a pH of, for example, about 3-8, preferably about 5-6. The methods of culture that can be employed include shaking culture and aerobic submerged culture in a jar fermenter. However, the foregoing conditions may be altered according to the microorganism or cell to be cultured, and are not limited to the foregoing, insofar as conditions suitable for producing the compositions of the present invention are provided.

The culture solution or the fungal cells obtained from cultivation for a desired period of time by any of the above-described methods is capable of providing the composition according to the present invention. For example, the composition of the present invention may be prepared by filtration of the culture supernatant followed by, as required, concentration, buffer substitution, sterilization by filtration, and freeze drying. The composition of the present invention may be either in the solid state (including the power state) or the liquid state.
Alternatively, the composition of the present invention may be purified by a combination of conventional processes, such as centrifugal separation, purification by ultrafiltration, salting out, and various chromatographies, such as ion-exchange resin chromatography (see Horio, T., "Basic Experimentation of Proteins and Enzymes", published by Nankodo Co., LTD.)

The composition according to the present invention contains diglycosidase. In other words, the composition according to the present invention has diglycosidase activity. Preferably, the composition according to the present invention has diglycosidase activity of 0.0001 units/mg or more in dry weight. Although no upper limit needs to be set on the diglycosidase activity, the maximum value may be, for example, 20 units/mg.
As used herein, diglycosidase refers to a sugar-chain hydrolytic enzyme capable of recognizing as a substrate a glycoside, which is composed of the non-sugar portion of the glycoside (referred to as an aglycon hereafter) and a branching or straight-chain sugar chain (which is in turn composed of one or more kinds of saccharides), with the non-sugar portion being bonded with the sugar chain via a hydroxyl of the sugar chain. Upon recognizing the substrate in units of disaccharide, diglycosidase cuts the substrate to produce the aglycon. In this specification, the diglycosidase activity is quantified by the following method:

### Method of measuring diglycosidase activity

In an automatic chemical analyzer (TBA-30R, manufactured by Toshiba Corporation), a sample solution (30 µL) containing a prescribed amount of the composition is mixed with 200 µL of solution in which p-nitrophenyl (pNP) primeveroside (2 mM) is dissolved in acetate buffer (a pH of 5.5). After the mixture is allowed to react at 40 °C with a 22.5 second cycle time for 9.75 minutes, 250 µL of sodium carbonate is added and the absorbance is then measured at a wave length of 412 nm. Instead of the sample solution, 20 mM acetate buffer (pH 5.5) was used as a reference for measurement in an identical manner. The amount of enzyme that increases the absorbance by one under these conditions is referred to as one unit (AU).
The aforementioned pNP-primeveroside was synthesized by using enzymatic xylosidase (manufactured by Sigma Japan) to cause reaction between pNP-glucoside (manufactured by Merck & Co., Inc.) and xylooligosaccharide (manufactured by Wako Pure Chemical Industries, Ltd.) so as to transfer a single residue of xylose to pNP-glucoside forming a β-1,6 bond.

Preferably, the composition of the present invention contains a-L-rhamnosidase as well as diglycosidase. In particular, the rhamnosidase activity is preferably 0.0001 units/mg or more in dry weight. Although there is no specific need to set an upper limit on the rhamnosidase activity, the maximum value may be, for example, 30 units/mg. Alpha-L-rhamnosidase is an enzyme that hydrolyzes the a-L-rhamnopyranoside residue at the non-reducing end of a polysaccharide including a-rhamnose. In this specification, the rhamnosidase activity is quantified by the following method:

### Method of measuring rhamnosidase activity

In an automatic chemical analyzer (TBA-30R, manufactured by Toshiba Corporation), a sample solution (30 µL) containing a predetermined amount of the composition is mixed with 200 µL of solution in which p-nitrophenyl (pNP)-a-rhamnoside (2 mM) (manufactured by Sigma Japan) is dissolved in acetate buffer (a pH of 5.5). After the mixture is allowed to react at 40 °C with a 22.5 second cycle time for 9.75 minutes, 250 µL of sodium carbonate is added and the absorbance is then measured at a wave length of 412 nm. Instead of the sample solution, 20 mM acetate buffer (pH 5.5) was used as a reference for measurement in an identical manner. The amount of enzyme that increases the absorbance by one under these conditions is referred to as one unit (AU).

In another aspect, the present invention relates to a method of making an alcoholic beverage made from grapes with one of the foregoing flavor-improving compositions and is characterized by including an enzymatic process step of causing the flavor-improving composition to operate (which may be simply referred to as "the enzymatic process step").
There is no limitation to the types of alcoholic beverages to which the present invention may be applied. The grape-based alcoholic beverages within the scope of the present invention include wine, brandy, such as cognac, which is a liquor distilled from wine, and mixed alcoholic beverages, such as vermouth, port, and liqueur. As used herein, wine includes a variety of types, such as red, white, rosé, and sparkling. Additionally, as used herein, wine concentrate, which may be later diluted or added to other food products, is also considered wine.

Preferably, the enzymatic process step according to the present invention is performed simultaneously with part of a standard process of manufacturing the grape-based alcoholic beverage. The reason for this is that since no separate enzymatic process step is required, the manufacturing efficiency is improved.
For example, a standard process of making red wine includes the steps of crushing and destemming, fermentation, squeezing, sediment removal, and aging, and any one or more of these steps may be performed under the presence of the composition of the present invention. Furthermore, a standard process of making white wine includes the steps of crushing and destemming, squeezing, fermentation, sediment removal, and aging, and any one or more of these steps may be performed under the presence of the composition.
By performing one or more of the process of making wine under the presence of the composition of the invention present as described above, the intended process(es) of the step(s) and the enzymatic process are performed simultaneously.

In the case of wine (including red, white, and rosé), the enzymatic process takes place preferably concurrently with the crushing and destemming, squeezing, fermentation, sediment removal, and/or aging. Preferably, the composition of the present invention is added for the enzymatic process during the fermentation and/or aging steps because each of these steps provides suitable temperature conditions for the enzymatic process and because, in the case of red wine, part of the fruit skin tissue that has been crushed provides conditions suitable for the operation of the enzyme.

If a step(s) of the standard process is performed under the presence of the composition of the present invention as described above, that composition need not to be added at the beginning of the step(s). Rather, the composition may be applied at any suitable time during that step. In this way, the duration of the operation of the enzyme is adjustable, thus providing for desired flavor improvement. During the enzymatic process, the processing temperature of the step can be adjusted to achieve good enzyme reaction.

Alternatively, the enzymatic process step according to the present invention may be performed as a separate step. If this enzymatic process step is performed concurrently with another step, it may be necessary to consider how the addition of the enzyme affects the processing efficiency and other aspects of this concurrent step. However, a separately performed enzymatic process step will eliminate the need for such consideration. This means that favorable temperature and pH conditions can be freely provided, thus enabling efficient enzymatic processing.

If performed as a separate step, the enzymatic process step may take place before or after any one or more of the steps of the foregoing standard manufacturing process (for example, the standard process includes, in red wine making, the steps of crushing and destemming, fermentation, squeezing, sediment removal, and aging, and in white wine making, the steps of crushing and destemming, squeezing, fermentation, sediment removal, and aging).

Preferably, the added composition should be removed by filtration with bentonite or thermal processing, at a suitable time after the enzymatic process step. The sediment removal step of the standard manufacturing process may also serve as this step of removing the added composition.

The composition according to the present invention may be directly added in either a liquid or solid (including power) form to the liquid crushed out of grapes (extract and fruit juice).

The amount of the composition of the present invention used in the enzymatic process step may be decided as desired, depending on the type of the grape used, the degree of flavor improvement required, the condition of the crushed grape liquid in the enzymatic process step. For example, if the enzymatic process is preformed by adding the enzyme before or during the fermentation step, the amount of diglycosidase to be added is decided to provide 0.0026-26000 units of diglycosidase for every 100 ml of crushed grape liquid obtained from 160 grams of grape. A preferred amount of diglycosidase used for this purpose is 0.026-2600 units and a more preferred amount is 0.26-260 units.
It should be noted that if an insufficient amount of the composition of the present invention is used, desired flavor improvement may not be obtained. Conversely, an excessive amount of the composition used may not only increase the manufacturing cost, but also it may impair the flavor of the beverage due to the effect of and the taste of the contaminants in the composition.

The temperature range for the operation of the added composition is normally from 4-40 °C, preferably 10-30 °C, and more preferably 15-25 °C. If the temperature at which the enzyme operates is below the aforementioned normal range, the enzyme in the composition is not allowed to operate fully, such that sufficient flavor improvement is not likely to occur. If the temperature is above the normal range, the enzyme in the composition becomes more susceptible to deactivation, and the components in the crushed grape liquid may undergo thermal denaturation, thus impairing the flavor.
Further, the pH range for the operation of the composition of the present invention is normally from 1.5-6.5, preferably 2.0-5.5, and more preferably 2.5-4.5. If the pH is below or above the aforementioned normal range, the enzyme in the composition is not allowed to operate fully, such that sufficient flavor improvement is not likely to occur, and the components in the crushed grape liquid may undergo thermal denaturation, thus impairing the flavor.
The following describes the present invention in detail by referring to specific examples. However, the present invention is not limited to these examples.

### Example 1. Preparation of a flavor-improving composition derived from a microorganism

### (1-1) Culture of Penicillium multicolor, Strain IAM7153

A culture medium (pH 5.6) containing 2.0% defatted soybean, 3.0% glucose, 0.5% potassium dihydrogenphosphate, 0.4% ammonium sulfate, and 0.3% dried yeast was sterilized at 121 °C for 20 minutes. Every 100 ml of the sterilized medium was inoculated with one platinum-loop of the fungus, and was subjected to pre-culture at 27 °C at a shaking rate of 140 times per minute. Five days later, 20 liters of the main medium (pH 4.9) containing 1.0% Sun Fiber R, 2.0% potassium dihydrogenphosphate, 1.0% ammonium sulfate, and 3.13% Myeast P1G, was sterilized in a jar fermenter having a capacity of 30 liters, for 20 minutes at 121 °C while agitating it 150 times per minute. This main culture medium was then inoculated with the medium of the foregoing preliminary culture at a final concentration of 1.5% (v/v) and cultured at the airflow rate of 0.75 vvm (15 liters/min), an internal pressure of 0.5 kg/cm² (48 kPa) and 27±1 °C for eight days.

### (1-2) Preparation of a flavor-improving composition from culture solution

Filtration facilitators, Zemlight Super 56M and Fine Flow A (2% each of the entire liquid volume), were added to the culture broth to perform diatomaceous earth filtration. The filtered broth was concentrated 20 times with an MW 6,000 ultrafilter (UF AIP-2020) and was substituted with 20 mM acetate buffer (pH 4.7). The obtained material was sterilized by filtration and freeze-dried so as to produce the flavor-improving composition.

### Example 2. Evaluation of the improvement of the wine flavor

### (2-1) Preparation of fruit juice (crushed grape liquid) from white wine grapes (the Kelner variety, produced in Hokkaido)

Juice from Kelner grapes, a German variety, was prepared as follows: Twelve kilograms of frozen Kelner grapes was first thawed, and then crushed and destemmed. During this process, 780 mg of potassium pyrosulfite was added, such that the final content of this additive was 100 mg/L (calculated based on the estimated liquid squeeze rate of 65%) The pericarp components were extracted by skin contact at room temperature for two hours. Thereafter, this was pressed through nylon mesh cloth, resulting in 7.5 liters of fruit juice. The percentage by specific gravity of sugar in the fruit juice was measured to give a specific gravity of 1.0847 and a percentage of sugar inverted from the juice of 20.18.

### (2-2) Alcohol fermentation, enzymatic process, and analysis of components

To perform alcohol fermentation, an appropriate amount of yeast (the trade name Uvaferm BC, manufactured by Novozymes Japan, Ltd.) was suspended in warm water (40 °C) to obtain a 0.1g/ml concentration. After the suspension was left standing for five minutes for activation, 15 ml of it was then added to the fruit juice for fermentation.
To produce enzyme reaction, the flavor-improving component of Example 1 was added to this fruit juice under the conditions shown in Table 1 below. As comparative examples, instead of the flavor-improving composition, a β-glucosidase composition commercially available for augmenting the aroma of white wine was used to produce enzyme reaction.

**Table 1**

| Enzyme composition | Timing of addition | Amount (units) |
|---|---|---|
| No additive | - | 0 |
| Flavor-improving composition | At the start of fermentation | 7.8 |
| | At the start of fermentation | 39 |
| | At the start of fermentation | 195 |
| | At the start of fermentation | 975 |
| | At the start of fermentation | 3900 |
| | At the start of fermentation | 7800 |
| | After fermentation | 7.8 |
| β-glucosidase composition | At the start of fermentation | 65.6 |
| | At the start of fermentation | 656 |
| | At the start of fermentation | 6560 |
| | After fermentation | 65.6 |

In the group of samples to which the flavor-improving composition was added, the amount of the enzyme composition added is indicated in terms of the diglycosidase activity in the composition added. Likewise, in the group of samples to which the B-glucosidase composition was added, the amount of the enzyme composition added is indicated in terms of the β-glucosidase activity in the composition added. The β-glucosidase activity was measured as follows:

### Method of measuring β-glucosidase activity

In an automatic chemical analyzer (TBA-30R, manufactured by Toshiba), a sample solution (30 µL) containing a prescribed amount of the composition is mixed with 200 µL solution in which 2 mM of p-nitrophenyl (pNP)-β-glucoside (manufactured by Sigma Japan) is dissolved in acetate buffer (a pH of 5.5). After the mixture is allowed to react at 40 °C with a 22.5 second cycle time for 9.75 minutes, 250 µL of sodium carbonate is added and the absorbance is then measured at a wave length of 412 nm. Instead of the sample solution, 20 mM acetate buffer (pH 5.5) was used as a reference for measurement in an identical manner. The amount of enzyme that increases the absorbance by one under these conditions is referred to as one unit (AU).

The addition of the enzyme composition and the enzyme reaction were effected by the following two methods: In Method (1), the enzyme composition was added simultaneously with the yeast to allow alcohol fermentation and enzyme reaction concurrently, whereas in Method (2), after the yeast was added to the fruit juice for alcohol fermentation, the enzyme composition was added for enzyme reaction. More specifically, in the former method or Method (1). after the yeast and the enzyme composition were added to the fruit juice, this mixture was left standing at 20 ° C for seven days to effect alcohol fermentation and enzyme reaction. Sampling was conducted on the second, forth, and seventh days (at the end of the fermentation). Centrifugal separation was performed on each sample at 3000 rpm for 10 minutes and the obtained supernatant was subjected to various analyses. The samples were analyzed for the pH, alcohol content, titratable acidity (with N/10 sodium hydroxide), sensory evaluation, quantity of terpene components responsible for the aroma with GC/MS equipment.
In the latter method or Method (2), after only the yeast was added, the fruit juice was left standing to ferment at 20 °C for seven days, whereupon the enzyme was added and the fermented juice was additionally left standing at 20 ° C for one month. Samples were taken upon completion of the enzyme reaction. Centrifugal separation was performed on each sample at 3000 rpm for 10 minutes and the obtained supernatant was subjected to various analyses. In this case, the samples were analyzed for the general factores (the pH, alcohol content, and titratable acidity (with N/10 sodium hydroxide)), sensory evaluation, quantity of terpene components responsible for the aroma with GC/MS equipment.

Table 2 shows the results of the analyses of the samples obtained by Method (1) (in which alcohol fermentation and enzyme reaction occur concurrently) for the general components and factors (the pH, alcohol content, and titratable acidity (with N/10 sodium hydroxide)).

**Table 2**

| Enzyme composition | Amount added (unit) | titratable acidity | | | pH | | | Alcohol | | |
|---|---|---|---|---|---|---|---|---|---|---|
| | | Day 2 | Day 4 | Day 7 | Day 2 | Day 4 | Day 7 | Day 2 | Day 4 | Day 7 |
| No additives | - | 10.1 | 9.4 | 9.5 | 3.9 | 3.9 | 4.0 | 2.5 | 9.9 | 12.7 |
| Flavor improving | 7.8 | 9.5 | 9.4 | 9.5 | 3.8 | 3.8 | 3.9 | 2.2 | 9.8 | 13.3 |
| composition | 39 | 9.7 | 9.3 | 9.5 | 3.8 | 3.8 | 3.9 | 2.2 | 10.3 | 13.4 |
| | 195 | 9.4 | 9.2 | 9.4 | 3.8 | 3.8 | 4.0 | 2.5 | 10.5 | 13.4 |
| | 975 | 9.6 | 9.1 | 9.7 | 3.8 | 3.8 | 4.0 | 2.9 | 11.3 | 13.3 |
| | 3900 | 9.8 | 9.7 | 9.8 | 3.8 | 3.8 | 4.1 | 3.2 | 12.5 | 13.3 |
| | 7800 | 9.7 | 9.3 | 10.1 | 3.9 | 3.9 | 4.2 | 3.6 | 12.5 | 12.4 |
| β-glucosidase | 65.6 | 9.2 | 9.1 | 9.2 | 3.9 | 3.9 | 4.0 | 1.4 | 9.5 | 13.2 |
| composition | 656 | 8.7 | 8.8 | 9.3 | 3.9 | 3.9 | 4.0 | 1.4 | 9.8 | 13.2 |
| | 6560 | 9.9 | 9.2 | 10.5 | 3.9 | 3.9 | 4.0 | 1.9 | 11.7 | 13.5 |

In the group of samples to which the flavor-improving composition was added, the amount of the enzyme composition added is indicated in terms of the diglycosidase activity in the composition added. Likewise, in the group of samples to which the β-glucosidase composition was added, the amount of the enzyme composition added is indicated in terms of the β-glucosidase activity in the composition added.

The results showed no significant change in the values for these factors caused by the addition of the flavor-improving composition. In addition to these factors, the samples were analyzed for the polyphenol content, specific gravity, and color tone. The results showed no significant change in these factors due to the addition of the flavor-improving composition, either (no data provided) . The foregoing results show that addition of the flavor-improving composition has little effect on the general components (factors), and that it is capable of enzymatic processing without affecting the overall quality of the product (which is evaluated on the basis of the above factors.

Table 3 shows the results of sensory evaluation of the samples produced by Method (1) upon the completion of the fermentation (on the seventh day). Eight panelists were assembled to grade the strength of the terpene aroma, which is regarded as an important characteristic in muscat wine and wine made from German grape varieties, on the scale of five (5: strong, 4: fairly strong, 3: average, 2: fairly weak, 1 : weak). For each sample, the panelists' grades were totaled and averaged.

**Table 3**

| Enzyme composition | Amount added (units) | Panelists | | | | | | | | Total | Average |
|---|---|---|---|---|---|---|---|---|---|---|---|
| | | A | B | C | D | E | F | G | H | | |
| No additives | | 3 | 2 | 4 | 2 | 2 | 3 | 3 | 3 | 22 | 2.8 |
| Flavor-improving composition | 7.8 | 4 | 4 | 3 | 3 | 4 | 4 | 5 | 2 | 29 | 3.6 |
| | 39 | 3 | 3 | 2 | 3 | 5 | 4 | 4 | 3 | 27 | 3.4 |
| | 195 | 2 | 4 | 4 | 4 | 3 | 3 | 2 | 1 | 23 | 2.9 |
| β-glucosidase composition | 65.6 | 3 | 2 | 3 | 4 | 3 | 4 | 4 | 3 | 26 | 3.3 |
| | 656 | 2 | 1 | 3 | 3 | 2 | 4 | 4 | 3 | 22 | 2.8 |
| | 6560 | 2 | 3 | 2 | 3 | 1 | 3 | 2 | 3 | 19 | 2.4 |

In the group of samples to which the flavor-improving composition was added, the amount of the enzyme composition added is indicated in terms of the diglycosidase activity in the composition added. Likewise, in the group of samples to which the β-glucosidase composition was added, the amount of the enzyme composition added is indicated in terms of the β-glucosidase activity in the composition added.

Table 3 shows that the addition of the flavor-improving composition clearly augments the terpene aroma.
Table 4 shows the results of GC/MS analyses for the components responsible for the terpene aroma.

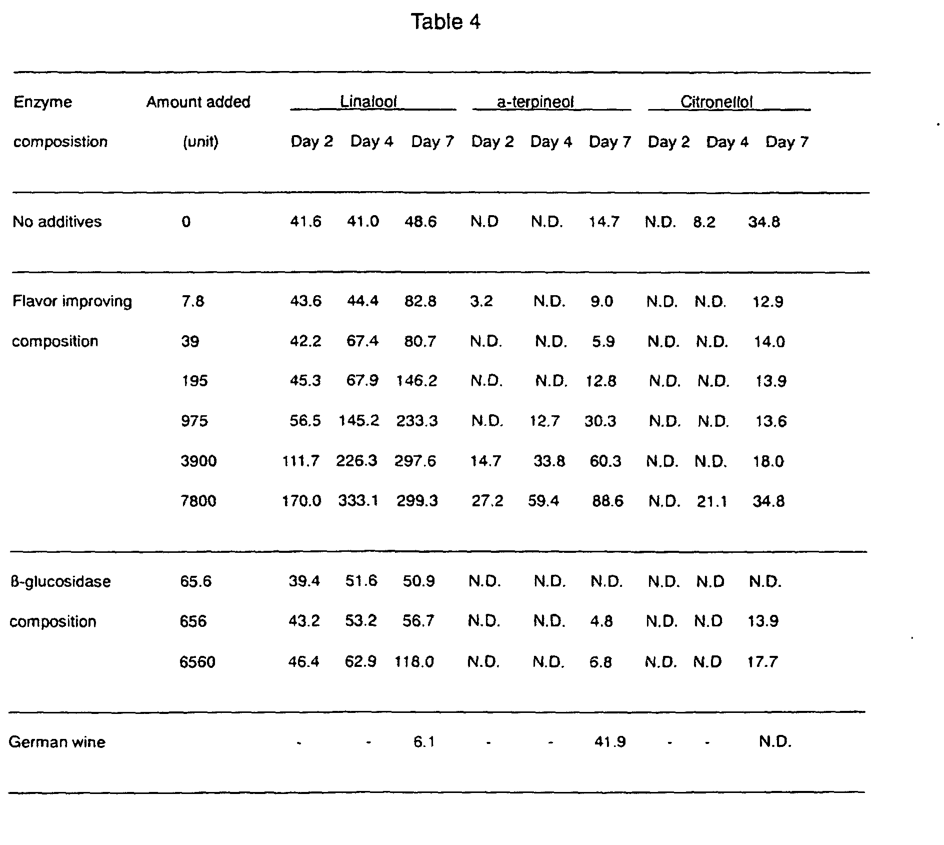

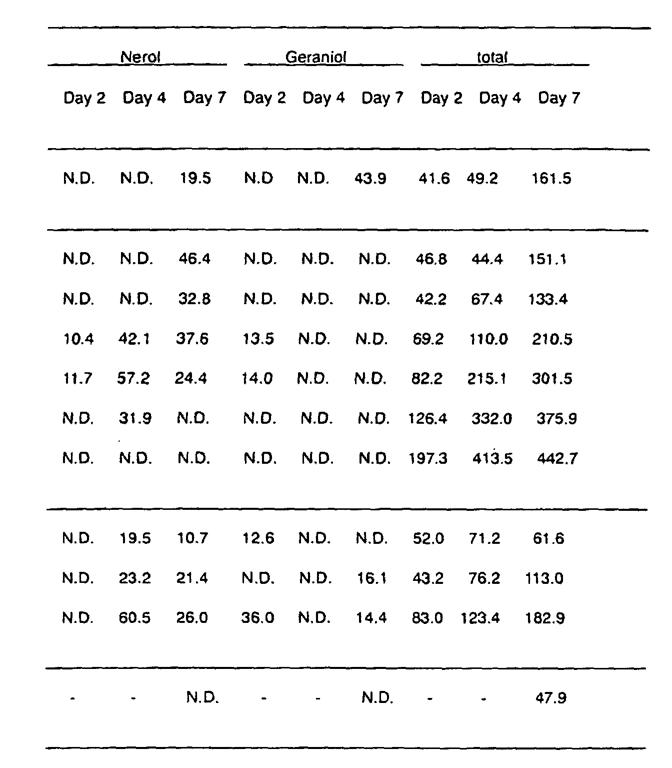

In the group of samples to which the flavor-improving composition was added, the amount of the enzyme composition added is indicated in terms of the diglycosidase activity in the composition added. Likewise, in the group of samples to which the β-glucosidase composition was added, the amount of the enzyme composition added is indicated in terms of the β-glucosidase activity in the composition added.

As shown in Table 4, although the amount of nerol or geraniol did not increase in accordance with the amount of the flavor-improving composition added (probably due to the fact that the experiment was on a small-scale, such that these components were affected, for example, oxidized during the enzyme reaction), the amounts of the other aroma components did increase in accordance with the amount of the flavor-improving composition added. It is also observed that the content of each aroma component changed generally in keeping with the number of days from the addition. It is additionally shown that in terms of the amount added, the flavor-improving composition more effectively augments the aroma components than the commercially available β-glucosidase composition. The bottom row of Table 4 shows the measurements of the components responsible for the aroma in a commercially available German wine.

Tables 5 and 6 show, respectively, the results of sensory evaluation and GC/MS analyses of the samples produced by Method (2), in which the fermentation occurred after the enzyme reaction. In the sensory evaluation, the panelists chose the one that they felt had a stronger terpene aroma between the sample obtained by using the flavor-improving composition and the sample obtained by using the commercially available β-glucosidase composition.

**Table 5**

| Enzyme composition | Amount added | Chosen as more aromatic | Comments |
|---|---|---|---|
| Flavor-improving composition | 7.8 | By 6 panelists | A fresh fragrance. A lightly flowery fragrance. Balmy. A mellow fragrance. Grapy. Slightly pungent. Refreshing |
| β-glucosidase composition | 65.6 | By 1 panelist | A subdued fragrance. Moderately strong green fragrance. A sour-sweet smell. Tastes like a medicine. Full-bodied. |

In the group of samples to which the flavor-improving composition was added, the amount of the enzyme composition added is indicated in terms of the diglycosidase activity in the composition added. Likewise, in the group of samples to which the β-glucosidase composition was added, the amount of the enzyme composition added is indicated in terms of the β-glucosidase activity in the composition added.

Table 5 confirms that the addition of the flavor-improving composition clearly augments the terpene aroma of wine more than the addition of the commercially available β-glucosidase composition. Since these sample groups give different aromatic impressions, presumably. the flavor-improving composition is capable of providing a novel aroma augmenting effect distinct from that provided by the exsiting β-glucosidase composition.

**Table 6**

| Enzyme composition | Amount added (units) | linalool | a-terpineol | citronellol | nerol | geraniol | Total |
|---|---|---|---|---|---|---|---|
| No additives | 0 | 72.5 | 13.9 | 9.4 | 3.6 | N.D. | 99.4 |
| Flavor-improving composition | 7.8 | 132.7 | 24.7 | N.D. | 37.6 | N.D. | 195.0 |
| β-glucosidase composition | 65.6 | 94.3 | 15.0 | N.D. | N.D. | N.D. | 109.3 |

In the group of samples to which the flavor-improving composition was added, the amount of the enzyme composition added is indicated in terms of the diglycosidase activity in the composition added. Likewise, in the group of samples to which the β-glucosidase composition was added, the amount of the enzyme composition added is indicated in terms of the β-glucosidase activity in the composition added.

Table 6 shows a higher content of each component responsible for the aroma in the samples produced with the flavor-improving composition, substantiating the results of the foregoing sensory evaluation. Moreover, nerol was detected in the samples produced with the flavor-improving composition, indicating flavor improvement that is qualitatively different from that achieved by the commercially available β-glucosidase.

### Example 3. Determination of the amounts of the flavor-improving composition to be added and comparison with other enzyme compositions

In order to further determine the relationship between the amount of the flavor-improving composition added and the effect of augmenting the components responsible for wine aroma, additional batches of white wine were prepared by narrowing the amounts of the enzymes added. In this experiment, samples in which the flavor-improving composition was used for enzyme processing were compared with those in which a commercially available β-glucosidase composition was used for enzyme processing. Table 7 shows the diglycosidase (DGL) activity, the rhamnosidase (Rhm) activity, and the β-glucosidase activities (Glc) of the flavor-improving composition and the β-glucosidase composition used.

**Table 7**

| Enzyme composition | Enzyme activity (unit/q) | | |
|---|---|---|---|
| | diglycosidase activity(*) | rhamnosidase activity(**) | glucosidase activity(***) |
| Flavor-improving composition | 2600 | 38532 | 1920 |
| β-glucosidase composition | 2.2 | 15.6 | 2187 |

| | | | |
|---|---|---|---|
| (*): Measured with pNP-β-primeveroside as the substrate. | | | |
| (**): Measured with pNP-a-rhamnoside as the substrate. | | | |
| (***): Measured with pNP-β-glucopyranoside as the substrate. | | | |

Following a process identical to the one in Example 2, Kelner fruit juice was prepared using 6 kg of Kelner grapes as the starting material. The specific gravity of the fruit juice was 1.0794 and the percentage of fruit sugar from the juice was 18.83.
After the fruit juice was dispensed, yeast (the trade name Uvaferm BC, manufactured by Novozymes Japan, Ltd.) and then an enzyme composition were added to each dispensation. A suitable amount of water was added to the yeast so as to obtain a 0.1 g/ml concentration, and the water solution was left standing at 40 ° C for five minutes to permit activation. Fifteen milliliters of it was then added to the fruit juice. A predetermined amount of each enzyme composition was dissolved in water and added to the fruit juice in the form of aqueous solution. Table 8 below shows the amount of each enzyme composition and the charge of each solution containing the enzyme composition.

**Table 8**

| Enzyme compsotion | Amount of addition (Units/charge) | Charge (ml) |
|---|---|---|
| No addition Flavor-improvement composition | 0 | 300 |
| | 3.9 | 300 |
| | 7.8 | 300 |
| | 23.4 | 300 |
| β-glucosidase composition | 2.0 | 200 |

In the group of samples to which the flavor-improving composition was added, the amount of the enzyme composition added is indicated in terms of the diglycosidase activity in the composition added. Likewise. in the group of samples to which the β-glucosidase composition was added. the amount of the enzyme composition added is indicated in terms of the β-glucosidase activity in the composition added.

After the yeast and the enzyme composition were added, the fruit juice was left standing at 20 ° C to effect alcohol fermentation and enzyme reaction. Upon completion of the fermentation (on the sixth day), 20 ml samples were taken. Each sample was centrifuged at 3000 rpm for 10 minutes. The resultant supernatant was analyzed for the general factors (the titratable acidity (with N/10 sodium hydroxide), pH, and alcohol content) and the components responsible for the aroma, and also subjected to sensory evaluation.
A thermo desorption system and an Agilent GC/MSD system (manufactured by GRESTEL K.K. ) were used for the analysis of the amounts of the aroma components. A column (HP-INNO Wax Polyethylene Glycol (30.0m×250µm×0.25µm)) was used for this analysis with helium as the mobile phase and at a flow rate of 1. Oml/min. The evaporation temperature was held at 40 °C for five minutes, raised at the rate of 5 ° C/min to 240 ° C, and held at this point for 15 minutes. The split ratio was 1:50. Additionally, 2.0g of NaCl and an internal control (4-Nonanol, 5µg) were added to 10 ml of each sample, which was then stirred with a stirrer (Twister, manufactured by GERSTEL K. K. ) for 30 minutes before conducting the analysis. The following are the aroma components (monoterpene alcohols) for this measurement and the m/z values used for the quantification.
Internal control: 4-Nonanol (m/z = 101)
Linanol (m/z = 93)
a-terpineol (m/z = 121)
Citronellol (m/z = 123)
Nerol (m/z = 93)
Geraniol (m/z = 123)

As the factor for quantification, approximately 1000 ppb of monoterpene alcohol was added to 0. 5% malic acid solution so as to perform analysis in the same manner as the samples.

Table 9 shows the results of the sample analyses performed at the completion of fermentation for the titratable acidity (with N/10 sodium hydroxide solution), pH, and alcohol content.

**Table 9**

| Enzyme composition | Amount added (units) | Timing of addition | Titratable acidity N/10 NaOH (ml) | pH | Alcohol (w/w%) |
|---|---|---|---|---|---|
| No additives | 0 | | 9.2 | 3.61 | 11.35 |
| Flavor-improving composition | 3.9 | Simultaneously with fermentation | 9 | 3.58 | 11.35 |
| | 7.8 | Simultaneously with fermentation | 9.1 | 3.58 | 11.35 |
| | 23.4 | Simultaneously with fermentation | 9.2 | 3.6 | 11.35 |
| β-glucosidase composition | 2.0 | Simultaneously with fermentation | 8.7 | 3.56 | 11.25 |

In the group of samples to which the flavor-improving composition was added, the amount of the enzyme composition added is indicated in terms of the diglycosidase activity in the composition added. Likewise, in the group of samples to which the β-glucosidase composition was added, the amount of the enzyme composition added is indicated in terms of the β-glucosidase activity in the composition added.

The results showed no significant change in the values for these components among the samples to which the flavor-improving composition was added. Neither did varying the added amounts result in any significant changes in the values for these components. The foregoing results confirm that the flavor-improving composition is capable of enzymatic processing while hardly affecting the general components selected for measurement, that is, the flavor-improving composition is capable of enzymatic processing without affecting the overall quality of the product (which is evaluated on the basis of these general components or factors.

Table 10 shows the results of analyses for the amounts of the components responsible for the aroma.

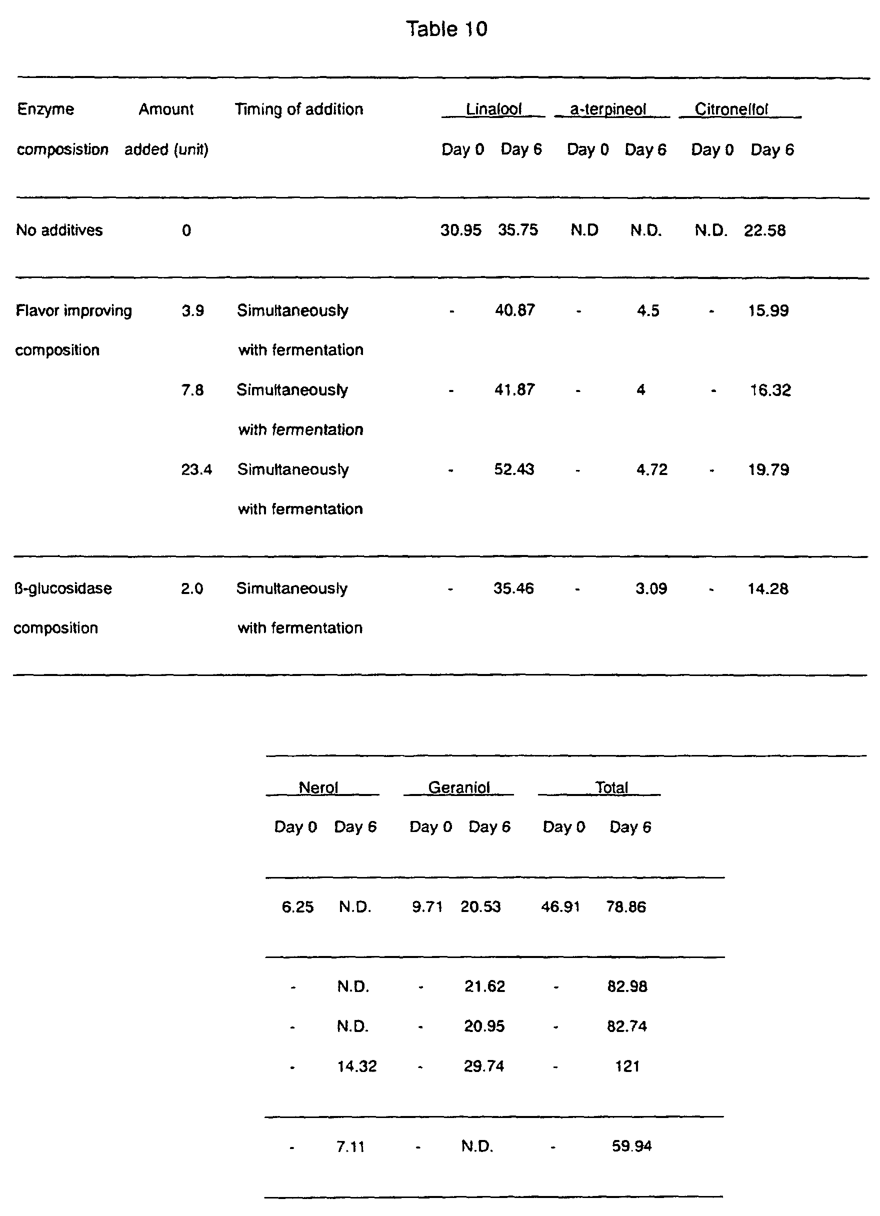

In the group of samples to which the flavor-improving composition was added, the amount of the enzyme composition added is indicated in terms of the diglycosidase activity in the composition added. Likewise, in the group of samples to which the β-glucosidase composition was added, the amount of the enzyme composition added is indicated in terms of the β-glucosidase activity in the composition added.

As shown in Table 10, among the samples to which the flavor-improving composition had been added, the content of each component responsible for aroma increased generally in proportion to the amount of the composition added.

Ten panelists were assembled to conduct an sensory test on samples prepared upon completion of the fermentation. The panelists graded the strength of the terpene aroma (including its strength on the palate) on the scale of five (5: strong, 4: fairly strong, 3: average, 2: fairly weak, 1: weak) for each sample, and the grades were totaled and averaged. Table 11 shows the results of the sensory test.

**Table 11**

| Enzyme Composition | Amount added (units) | Timing of addition | Panelists | | | | | | | | | | Total | Average |
|---|---|---|---|---|---|---|---|---|---|---|---|---|---|---|
| | | | A | B | C | D | E | F | G | H | I | J | | |
| No additives | 0 | | 2 | 3 | 2 | 3 | 3 | 2 | 3 | 3 | 4 | 2 | 27 | 2.7 |
| Flavor-improving Composition | 3.9 | Simultaneously with fermentation | 2 | 2 | 4 | 2 | 2 | 1 | 3 | 1 | 3 | 3 | 23 | 2.3 |
| | 7.8 | Simultaneously with fermentation | 4 | 2 | 4 | 5 | 4 | 2 | 4 | 1 | 2 | 2 | 30 | 3.0 |
| | 23.4 | Simultaneously with fermentation | 5 | 4 | 3 | 4 | 4 | 3 | 4 | 1 | 4 | 3 | 35 | 3.5 |
| β-glucosidase composition | 2.0 | Simultaneously with fermentation | 3 | 3 | 2 | 3 | 2 | 1 | 4 | 3 | 4 | 1 | 26 | 2.6 |

In the group of samples to which the flavor-improving composition was added, the amount of the enzyme composition added is indicated in terms of the diglycosidase activity in the composition added. Likewise, in the group of samples to which the β-glucosidase composition was added, the amount of the enzyme composition added is indicated in terms of the β-glucosidase activity in the composition added.

The results of the evaluation indicate that the group of samples to which the flavor-improving composition was added provides approximately the same level of terpene aroma as the control (no enzyme added) or a stronger level than the control. The sample to which 3.9 units was added received lower grades than the control, showing such a small addition does not sufficiently augment the components responsible for the aroma. Meanwhile, the sample that received 7.8 units was given significantly higher grades, indicating this amount provides sufficient augmentation of the aroma components. It is also confirmed that the sample to which even more units, i. e. , 39 units, was added further augmented the components responsible for the aroma. These results indicate that adding at least 7.8 units of the flavor-improving composition augments the components responsible for the aroma.

### Example 4. Evaluation of the improvement of the flavor of red wine

The improvement of the flavor of red wine was evaluated by the following procedure: The flavor-improving component of Example 1 was added to commercially available wine (Bordeaux Superieur, imported by Kokubu & Co., Ltd.) under the conditions in Table 12 below so as to effect enzymatic operation at 20 °C for nine days. Thereupon, each sample was centrifuged at 3000-rpm for 10 minutes and the obtained supernatant was subjected to analysis for the components responsible for the aroma. A β-glucosidase composition commercially available for augmenting the aroma of white wine was used in comparative examples.

**Table 12**

| No. | Amount of enzyme added to every 30 ml of red wine | |
|---|---|---|
| 1 | 30 mg of flavor-improving composition & 0.1 ml of water added: | 78 units |
| 2 | 0.1 ml of solution containing 30 mg of flavor-improving composition per ml: | 7.8 units |
| 3 | 0.1 ml of solution containing 3 mg of flavor-improving composition per ml: | 0.78 units |
| 5 | 0.1 ml of solution containing 30 mg of β-glucosidase composition per ml: | 65.3 units |
| 7 | No enzyme added but 0.1 ml of water added: | 0 |

A headspace (HP7694 Headspace Sampler, manufactured by Alilent Technologies Inc.) -GC/MSD (HP5973 GC/HP6890 MSD, manufactured by Alilent Technologies Inc.) system was used for the analysis of the amounts of the components responsible for the aroma. The column used for this analysis was an HP-WAX (60 m×250 µm×0.2 5µm) with helium as the mobile phase and at a flow rate of 1.0 ml/min. After a sample placed in a vial for analysis was heated at 85 °C for 20 minutes, the gas was sampled and injected into the GC/MS at a split ratio of 25:1. After being initially maintained at 35 ° C for 5 minutes. the oven was heated to 100 ° C at the rate of 5 ° C/min and further heated to 230 ° C at the rate of 10 ° C/min , where it was held for 10 minutes.

In the group of samples to which the flavor-improving composition was added, the amount of the enzyme composition added is indicated in terms of the diglycosidase activity in the composition added. Likewise, in the group of samples to which the B-glucosidase composition was added. the amount of the enzyme composition added is indicated in terms of the β-glucosidase activity in the composition added.

Table 13 shows the results of the analysis.

**Table 13**

| Peak No | No additives | Amount of additive diqlycosidase units | | | Amount of additive β-glucosidase units | Name of compound |
|---|---|---|---|---|---|---|
| | | 78 | 7.8 | 0.78 | 65.3 | |
| 1 | 645813 | 1032273 | 736483 | 522471 | 769260 | Ethyl propionate |
| | 1.0 | 1.6 | 1.1 | 0.8 | 1.2 | |
| 2 | 2297101 | 14388032 | 12024229 | 4407696 | 2393265 | Ethyl caprylate |
| | 1.0 | 6.3 | 5.2 | 1.9 | 1.0 | |
| 3 | 494374 | 1066060 | 702584 | 539129 | 505635 | Benzaldehyde |
| | 1.0 | 2.2 | 1.4 | 1.1 | 1.0 | |
| 4 | N.D. | 213325 | 300307 | N.D. | 137005 | Butane-4-oide |
| | - | 8 | 8 | - | 8 | |
| 5 | N.D. | 187661 | 83903 | N.D. | N.D. | Methyl salicylate |
| | - | 8 | 8 | - | - | |
| 6 | 118608 | 296007 | 195854 | 60338 | 87206 | Benzylalcohol |
| | 1.0 | 2.5 | 1.7 | 0.5 | 0.7 | |

In the group of samples to which the flavor-improving composition was added, the amount of the enzyme composition added is indicated in terms of the diglycosidase activity in the composition added. Likewise, in the group of samples to which the β-glucosidase composition was added. the amount of the enzyme composition added is indicated in terms of the β-glucosidase activity in the composition added.

In Table 13. the samples to which no enzyme was added were processed in the same manner (left standing at 20 ° C for nine days) as those to which the flavor-improving composition was added. Table 13 lists only those components that exhibit different results as compared with those with no additives (i.e. , the controls). For each peak, the upper value represents the peak area, whereas the lower value represents its area ratio to the value for the sample with no additives. It is shown that the amounts of such components responsible for the aroma as benzaldehyde, methyl salicylate, and benzyl alcohol (known to exist in the form of glycosides as precursors) markedly increased through the operation of the flavor-improving composition. Additionally, esters, such as ethyl propionate and ethyl caprylate, are shown to have increased in amount. Meanwhile, although the amounts of some components are shown to have increased in the comparative example, to which the β-glucosidase composition was added, the increases were modest. Moreover, the operation of the flavor-improving composition imparted a sweet, flowery aroma to the wine, substantiating the improvement of the aroma (no data provided).

The results of the foregoing examples confirm that the operation of the flavor-improving composition of the present invention in a winemaking process is an effective means to improve the components in wine responsible for the aroma. Since the flavor-improving composition according to the present invention acts on components in grape juice, from which wine is made, to bring out the aroma components, this flavor-improving composition is effective in augmenting the aroma components not only in white and red wine (used as examples above) but also in other types of wine, such as rosé, as well as other grape-based alcoholic beverages.

The following is disclosed:
(11) A composition as set forth in any one of claims 1-4, wherein the rhamnosidase activity is 0.0001 units/mg or more in dry weight.
(21) A method of manufacturing a grape-based alcoholic beverage. including an enzymatic process step of causing diglycosidase to operate.
(22) A method of manufacturing as set forth in (21), wherein the enzymatic process step includes addition of diglycosidase in part of the process of manufacturing the grape-based alcoholic beverage.
(23) A method of manufacturing as set forth in (22), wherein the part of the process of manufacturing includes one or more steps selected from the group consisting of squeezing, fermentation, sediment removal, and aging.
(24) A method of manufacturing a grape-based alcoholic beverage, characterized by adding diglycosidase in a fermentation step and/or an aging step.
(25) A method of manufacturing as set forth in any one of (21) to (24), wherein the diglycosidase is derived from a microorganism.
(26) A method of manufacturing as set forth in any one of (21) to (24), wherein the diglycosidase is derived from Penicillium multicolor.
(27) A method of manufacturing as set forth in any one of (21) to (24), wherein the diglycosidase is derived from Aspergillus fumigatus.
(28) A method of manufacturing a grape-based alcoholic beverage as set forth in any one of (21) to (27), wherein the grape-based alcoholic beverage is wine.
(29) A grape-based alcoholic beverage manufactured by any one of the methods set forth in (21) to (28).
(30) A grape-based alcoholic beverage the flavor of which has been improved by the operation of diglycosidase.
(31) Wine whose flavor has been improved by the operation of diglycosidase.
(41) A method of manufacturing a grape-based alcoholic beverage, including an enzymatic process step of causing diglycosidase and rhamnosidase to operate.
(42) A method of manufacturing as set forth in (41), wherein the enzymatic process step includes addition of diglycosidase and rhamnosidase in part of the process of manufacturing the grape-based alcoholic beverage.
(43) A method of manufacturing as set forth in (42), wherein the part of the process of manufacturing includes one or more steps selected from the group consisting of squeezing, fermentation, sediment removal, and aging.
(44) A method of manufacturing a grape-based alcoholic beverage, characterized by adding diglycosidase and rhamnosidase in a fermentation step and/or an aging step.
(45) A method of manufacturing as set forth in any one of (41) to (44), wherein the diglycosidase is derived from a microorganism.
(46) A method of manufacturing as set forth in any one of (41) to (44), wherein the diglycosidase and rhamnosidase are derived from Penicillium multicolor.
(47) A method of manufacturing as set forth in any one of (41) to (44) . wherein the diglycosidase and rhamnosidase are derived from Aspergillus fumigatus.
(48) A method of manufacturing a grape-based alcoholic beverage as set forth in any one of (41) to (47), wherein the grape-based alcoholic beverage is wine.
(49) A grape-based alcoholic beverage manufactured by any one of the methods set forth in any one of (41) to (48).
(50) A grape-based alcoholic beverage the flavor of which has been improved by the operation of diglycosidase and rhamnosidase.
(51) Wine whose flavor has been improved by the operation of diglycosidase and rhamnosidase.

### INDUSTRIAL APPLICABILITY

A grape-based alcoholic beverage with improved flavor is provided by augmentation of the components responsible for its aroma as a result of application of the present invention. More particularly, the present invention is capable of providing a grape-based alcoholic beverage with better flavor than alcoholic beverages whose flavors are improved with conventional, commercially available β-glucosidase compositions.
Moreover, by adjusting the usage of a composition according to the present invention, the degree of augmentation of the components responsible for the aroma may also be adjusted, making it possible to provide grape-based alcoholic beverages having a variety of aromatic balances.
Furthermore, any of the compositions according to the present invention may be added to operate before or during the fermentation step. This means that there are fewer limits on the timing of adding these compositions, thus providing advantages in manufacturing. If added before or during the fermentation step, the compositions of the present invention may be removed simultaneously with the yeast, thus simplifying the manufacturing process and reducing the manufacturing costs.

## Claims

1. A composition for improving the flavor of an alcoholic beverage made from grapes, the composition containing a culture of a strain belonging to Genus Aspergillus, Genus Penicillium, Genus Rhizopus, Genus Rhizomucor, Genus Talaromyces, Genus Mortierella, Genus Cryptococcus, Genus Microbacterium, Genus Corynebacterium, or Genus Actinoplanes, and being capable of producing diglycosidase.

2. A composition according to claim 1, wherein the strain belongs to Aspergillus niger, Aspergillus fumigatus, or Penicillium multicolor.

3. A composition according to claim 1, wherein the strain is Aspergillus niger IF04407, Aspergillus niger IAM2020, Aspergillus fumigatus IAM2046, or Penicillium multicolor IAM7153.

4. A composition including an extracellular enzyme produced by Penicillium multicolor IAM7153.

5. A composition according to claim 1, wherein the diglycosidase activity is 0.0001 units/mg or more in dry weight.

6. A method of manufacturing a grape-based alcoholic beverage, including an enzymatic process step of causing the flavor-improving composition according to claim 1 to operate.

7. A method of manufacturing according to claim 6, wherein the enzymatic process step includes addition of the flavor-improving composition in part of the process of manufacturing the grape-based alcoholic beverage.

8. A method of manufacturing according to claim 7, wherein said part of the process of manufacturing includes one or more steps selected from the group consisting of crushing and destemming, squeezing, fermentation, sediment removal, and aging.

9. A method of manufacturing a grape-based alcoholic beverage, **characterized by** adding the composition according to claim 1 in the fermentation and/or aging step.

10. A method of manufacturing a grape-based alcoholic beverage according to claim 6, wherein the grape-based alcoholic beverage is wine.

11. A grape-based alcoholic beverage manufactured by the method according to Claim 6.
